# EUROPEAN PATENT APPLICATION

(11) **EP 4 410 889 A1**
(43) Date of publication of application: **07.08.2024**
(21) Application number: 22875840.5
(22) Date of filing: 14.09.2022
(51) Int. Cl.: C08L 61/18, C08K 3/04, H01M 4/587

(54) **NANOCARBON DISPERSION AND BATTERY USING SAME**

(30) Priority: 29.09.2021 JP 2021159943
(71) Applicant: DKS Co. Ltd., Kyoto-shi, Kyoto 600-8873 (JP)
(72) Inventor: SOFUE Ayano, kyoto-shi, Kyoto 600-8873 (JP); NAKAGAWA Naoki, kyoto-shi, Kyoto 600-8873 (JP); ISHIDA Hisayuki, kyoto-shi, Kyoto 600-8873 (JP); SAITO Yasuteru, kyoto-shi, Kyoto 600-8873 (JP)
(74) Representative: TBK
(86) International application number: PCT/JP2022/034423
(87) International publication number: WO 2023/053969

(57) **Abstract**

Provided is a nanocarbon dispersion having good dispersibility of nanocarbon.

A nanocarbon dispersion according to an embodiment includes (A) nanocarbon, (B) a naphthalenesulfonic acid condensate which is at least one selected from the group consisting of alkylnaphthalenesulfonic acid-formaldehyde condensates, a naphthalenesulfonic acid-formaldehyde condensate, formaldehyde condensates of an alkylnaphthalenesulfonic acid and naphthalenesulfonic acid, and salts thereof and which has a number-average molecular weight of 470 to 3,000, (C) an anionic water-soluble polymer, (D) an organic solvent having an O/I of less than 1.00, the O/I being a ratio of an organic value to an inorganic value in an organic conceptual diagram, and (E) water.

## Description

### Technical Field

Embodiments of the present invention relate to a nanocarbon dispersion and a battery using the same.

### Background Art

Nanocarbon such as carbon nanotube has good electrical conductivity but strongly aggregates due to van der Waals forces, resulting in a problem of difficulty in being uniformly dispersed in water.

To improve dispersibility of nanocarbon, for example, PTL 1 discloses that a carbon nanotube aqueous dispersion liquid is obtained by using, as a dispersant, one or more selected from each of the group A of anionic surfactants consisting of a methylnaphthalenesulfonic acid-formalin condensate salt, a naphthalenesulfonic acid-formalin condensate salt, and alkylene maleic acid copolymer salts; and the group B of polysaccharides consisting of water-soluble xylan, xanthan gums, guar gums, gellan gums, and carboxymethyl cellulose.

### Citation List

### Patent Literature

PTL 1: Japanese Unexamined Patent Application Publication No. 2013-082610

### Summary of Invention

### Technical Problem

An object of embodiments of the present invention is to provide a nanocarbon dispersion having good dispersibility of nanocarbon.

### Solution to Problem

The present invention includes the following embodiments.
[1] A nanocarbon dispersion including (A) nanocarbon; (B) a naphthalenesulfonic acid condensate which is at least one selected from the group consisting of alkylnaphthalenesulfonic acid-formaldehyde condensates, a naphthalenesulfonic acid-formaldehyde condensate, formaldehyde condensates of an alkylnaphthalenesulfonic acid and naphthalenesulfonic acid, and salts thereof and which has a number-average molecular weight of 470 to 3,000; (C) an anionic water-soluble polymer (provided that the naphthalenesulfonic acid condensate is excluded); (D) an organic solvent having an O/I of less than 1.00, the O/I being a ratio of an organic value to an inorganic value in an organic conceptual diagram; and (E) water.
[2] The nanocarbon dispersion according to [1], in which the organic solvent is a nitrogen-containing organic solvent.
[3] The nanocarbon dispersion according to [1] or [2], in which a content of the organic solvent is 0.1 to 50 parts by mass relative to 100 parts by mass of water.
[4] The nanocarbon dispersion according to any one of [1] to [3], in which a 2 mass% aqueous solution of the anionic water-soluble polymer has a viscosity of 1 to 5,000 mPa·s.
[5] The nanocarbon dispersion according to any one of [1] to [4], in which the naphthalenesulfonic acid condensate includes at least one selected from the group consisting of alkylnaphthalenesulfonic acid-formaldehyde condensates, formaldehyde condensates of an alkylnaphthalenesulfonic acid and naphthalenesulfonic acid, the formaldehyde condensates having a molar ratio of the alkylnaphthalenesulfonic acid of 50% by mole or more, and salts thereof.
[6] The nanocarbon dispersion according to any one of [1] to [5], in which the anionic water-soluble polymer includes at least one selected from the group consisting of carboxymethyl cellulose, polycarboxylic acids, and salts thereof.
[7] The nanocarbon dispersion according to any one of [1] to [6], in which the nanocarbon dispersion is an electrode coating material for a battery.
[8] A battery including an electrode produced using the nanocarbon dispersion according to [7].

### Advantageous Effects of Invention

According to the embodiments of the present invention, dispersibility of nanocarbon can be improved.

### Description of Embodiments

A nanocarbon dispersion according to the present embodiment includes (A) nanocarbon, (B) a naphthalenesulfonic acid condensate, (C) an anionic water-soluble polymer, (D) an organic solvent, and (E) water.

### [(A) Nanocarbon]

The nanocarbon serving as a component (A) is carbon having a size of at least one nanosized dimension (less than 1 µm) and refers to, for example, in the case of the form of a particle, one having a particle size (a primary particle size in the case of conductive carbon black, for example) of less than 1 pm; in the case of the form of a cylinder or a column, one having a diameter of less than 1 pm; in the case of the form of a fiber, one having a fiber diameter of less than 1 µm; and in the case of the form of a sheet, one having a thickness of less than 1 µm. The particle size, the diameter, the fiber diameter, and the thickness are each preferably 100 nm or less, more preferably 1 to 100 nm and may be 1 to 50 nm.

Specific examples of nanocarbon include carbon nanotubes (CNTs), graphene, graphene nanoplatelets, graphite, carbon nanofibers, and conductive carbon black (e.g., furnace black, acetylene black, thermal black, channel black, and Ketjenblack). Any one of these may be used, or two or more of these may be used in combination. Of these, carbon nanotubes are preferably used as nanocarbon.

Carbon nanotubes are a single-layer or multi-layer coaxial tubular substances composed of a six-membered ring network (graphene sheet) constituted by carbon. Carbon nanotubes include single-walled nanotubes (SWCNTs) consisting of a single layer and multi-walled nanotubes (MWCNTs) consisting of multiple layers, and among carbon the nanotubes consisting of multiple layers, carbon nanotubes consisting of two layers are particularly referred to as double-walled nanotubes (DWCNTs). Any one of these may be used, or two or more of these may be used in combination.

The average diameter of carbon nanotubes is preferably 0.5 to 100 nm, more preferably 1 to 50 nm. The average length of carbon nanotubes is not particularly limited and may be, for example, 50 nm to 10 mm or may be 500 nm to 100 pm. The aspect ratio (that is, the ratio of the average length to the average diameter) of carbon nanotubes is not particularly limited and may be, for example, 10 or more or may be 100 or more.

Herein, the average diameter and the average length of carbon nanotubes can be determined by measuring dimensions of 50 carbon nanotubes that are randomly selected in an atomic force microscope image, and taking the arithmetic averages of the dimensions. Lengths on the order of millimeters, which cannot be measured with an atomic force microscope, may be measured using an image obtained with a microscope. The dimensions of any other nanocarbon can also be measured in the same manner.

### [(B) Naphthalenesulfonic acid condensate]

The naphthalenesulfonic acid condensate serving as a component (B) is at least one selected from the group consisting of alkylnaphthalenesulfonic acid-formaldehyde condensates, a naphthalenesulfonic acid-formaldehyde condensate, formaldehyde condensates of an alkylnaphthalenesulfonic acid and naphthalenesulfonic acid, and salts thereof. Such a naphthalenesulfonic acid condensate has a high affinity with nanocarbon and functions as a dispersant of nanocarbon.

Examples of the salts include alkali metal salts such as sodium salts, lithium salts, and potassium salts; alkaline-earth metal salts such as calcium salts and magnesium salts; and organic salts such as ammonium salts, alkylamine salts, and alkanolamine salts. Only any one of these salts may be included, or two or more of these salts may be included. Of these, alkali metal salts are preferred.

(B1) Alkylnaphthalenesulfonic acid-formaldehyde condensates and/or salts thereof, which are one example of the component (B), are condensates obtained by subjecting an alkylnaphthalenesulfonic acid to formaldehyde condensation, salts thereof, or mixtures of the condensates and salts thereof. Examples of the alkylnaphthalenesulfonic acid include methylnaphthalenesulfonic acid, ethylnaphthalenesulfonic acid, propylnaphthalenesulfonic acid, and butylnaphthalenesulfonic acid. The number of carbon atoms of the alkyl group serving as a substituent is preferably 1 to 6, more preferably 1 to 4, still more preferably 1 (that is, the alkyl group is a methyl group).

(B2) A naphthalenesulfonic acid-formaldehyde condensate and/or a salt thereof, which is one example of the component (B), is a condensate obtained by subjecting naphthalenesulfonic acid to formaldehyde condensation, a salt thereof, or a mixture of the condensate and a salt thereof.

(B3) Formaldehyde condensates of an alkylnaphthalenesulfonic acid and naphthalenesulfonic acid and/or salts thereof, which are one example of the component (B), are condensates obtained by subjecting an alkylnaphthalenesulfonic acid and naphthalenesulfonic acid to formaldehyde condensation, salts thereof, or mixtures of the condensates and salts thereof. The alkylnaphthalenesulfonic acid is preferably one having an alkyl group having 1 to 6 carbon atoms, more preferably one having an alkyl group having 1 to 4 carbon atoms, still more preferably one having a methyl group, as described above.

In one embodiment, the component (B) preferably includes at least one selected from the group consisting of the (B1) alkylnaphthalenesulfonic acid-formaldehyde condensates and/or salts thereof and, among the (B3) above, formaldehyde condensates (B31) having a molar ratio of the alkylnaphthalenesulfonic acid of 50% by mole or more. This enables the dispersibility of nanocarbon to be further improved.

The above formaldehyde condensates (B31) are, among the (B3) formaldehyde condensates of an alkylnaphthalenesulfonic acid and naphthalenesulfonic acid and/or salts thereof, those in which the amount of alkylnaphthalenesulfonic acid relative to the total amount of the alkylnaphthalenesulfonic acid and naphthalenesulfonic acid is 50% or more in terms of molar ratio. The molar ratio is more preferably 60% or more. The upper limit of the molar ratio is not particularly limited and may be, for example, 90% by mole or less; however, the case of 100% by mole does not correspond to (B3) but corresponds to (B1).

In the above preferred embodiment, when the component (B) includes (B1) and/or (B31), the content of (B1) and/or (B31) is not particularly limited, but is preferably 30% by mass or more, more preferably 50% by mass or more, still more preferably 70% by mass or more, and may be 100% by mass based on 100% by mass of the component (B).

The naphthalenesulfonic acid condensate serving as the component (B) has a number-average molecular weight (Mn) of 470 to 3,000. When the number-average molecular weight of the naphthalenesulfonic acid condensate is 3,000 or less, the dispersibility of nanocarbon can be improved, and the viscosity can be reduced. The number-average molecular weight of the naphthalenesulfonic acid condensate is preferably 500 or more, more preferably 700 or more and is preferably 2,500 or less, more preferably 2,000 or less, still more preferably 1,600 or less.

Herein, the number-average molecular weight of the naphthalenesulfonic acid condensate is measured by GPC (Gel Permeation Chromatography). The number-average molecular weights in Examples described later are values measured by the following method.

### <Method for measuring number-average molecular weight (Mn) of naphthalenesulfonic acid condensate>

GPC (Gel Permeation Chromatography) method
·Apparatus
   Detector: Ultraviolet detector UV-8000, manufactured by Tosoh Corporation
   Pump: Model CCPD, manufactured by Tosoh Corporation
   Column: TSKgel G3000SW + G4000SW + Guard column, manufactured by Tosoh Corporation
   Integrator: Model SC-8010, manufactured by Tosoh Corporation
·Measurement method

A 40/60 [vol%] acetonitrile/0.005 mol aqueous sodium acetate solution was used as a mobile phase solvent, and about 66 mg of an active ingredient was dissolved in 10 mL of the mobile phase solvent. After filtration through a filter, 10 µL of the resulting solution was injected. Analytical conditions were as follows: flow rate [mL/min] = 0.85, column temperature = 40°C, measurement wavelength [nm] = 254, measurement pressure [kg/cm²] = 40 to 60, and measurement time [min] = 60. A polystyrene sulfonic acid sodium salt having a known molecular weight was used as a standard substance.

### [(C) Anionic water-soluble polymer]

In the present embodiment, an anionic water-soluble polymer serving as a component (C) is used together with the component (B) described above. Use of the component (B) and the component (C) in combination enables the dispersibility of nanocarbon to be further improved and enables dispersion stability to be improved. Herein, the naphthalenesulfonic acid condensate serving as the component (B) is excluded from the anionic water-soluble polymer serving as the component (C).

The anionic water-soluble polymer refers to a water-soluble polymer having an anionic functional group. The anionic functional group may be, for example, at least one selected from the group consisting of a carboxy group, a phosphate group, a sulfonic acid group, a nitric acid group, a boric acid group, and a sulfate group. Of these, a carboxy group is preferred.

Specific examples of the anionic water-soluble polymer include (C1) carboxymethyl cellulose and/or salts thereof (hereinafter, may be referred to as "CMC") and (C2) polycarboxylic acids and/or salts thereof. Of these, CMC is preferably used.

CMC has a structure in which hydroxyl groups in glucose residues constituting cellulose are substituted with carboxymethyl ether groups. CMC may have carboxy groups or may have the form of a carboxylate, and both of these may be used in combination. Examples of the salts of carboxymethyl cellulose include alkali metal salts such as sodium salts, lithium salts, and potassium salts; alkaline-earth metal salts such as calcium salts and magnesium salts; and organic salts such as ammonium salts, alkylamine salts, and alkanolamine salts. Only any one of these salts may be included, or two or more of these salts may be included. Of these, alkali metal salts are preferred.

The degree of etherification of CMC is not particularly limited but is, for example, preferably 0.4 to 1.3, more preferably 0.5 to 1.0, still more preferably 0.6 to 0.8. Herein, the degree of etherification of CMC is measured by the following method.

### (Degree of etherification)

CMC (0.6 g) is dried at 105°C for four hours. The mass of the dried product is precisely weighed, and the dried product is then wrapped with filter paper and incinerated in a porcelain crucible. The incinerated product is transferred to a 500 mL beaker, and 250 mL of water and 35 mL of a 0.05 mol/L aqueous sulfuric acid solution are added thereto, and the resulting mixture is boiled for 30 minutes. After cooling, the excess acid is back-titrated with a 0.1 mol/L aqueous potassium hydroxide solution (phenolphthalein is used as an indicator). The degree of etherification is calculated by the following formula. (Degree of etherification) = 162 × A / (10000 - 80A) A = (af - bf1) / mass of dried product (g)
A: amount (mL) of 0.05 mol/L aqueous sulfuric acid solution consumed by combined alkali in 1 g of sample
a: amount (mL) of 0.05 mol/L aqueous sulfuric acid solution used
f: titer of 0.05 mol/L aqueous sulfuric acid solution
b: amount (mL) of titration of 0.1 mol/L aqueous potassium hydroxide solution
f1: titer of 0.1 mol/L aqueous potassium hydroxide solution

Examples of polycarboxylic acids include polyacrylic acid, polymethacrylic acid, copolymers of acrylic acid and maleic acid, copolymers of methacrylic acid and maleic acid, and salts thereof. Any one of these may be used, or two or more of these may be used in combination. Examples of the salts of polycarboxylic acids include alkali metal salts such as sodium salts, lithium salts, and potassium salts; alkaline-earth metal salts such as calcium salts and magnesium salts; earth metal salts such as boron and aluminum salts; and organic salts such as ammonium salts, alkylamine salts, and alkanolamine salts. Only any one of these salts may be included or two or more of these salts may be included. Of these, alkali metal and alkaline-earth metal salts are preferred.

As for the anionic water-soluble polymer serving as the component (C), a 2 mass% aqueous solution of the anionic water-soluble polymer preferably has a viscosity (25°C) of 1 to 5,000 mPa·s. When the viscosity is 1 mPa·s or more, stability of the dispersion is improved. When the viscosity is 5,000 mPa·s or less, the stirring efficiency during dispersion is improved. The viscosity is more preferably 2 to 500 mPa·s. Herein, the viscosity of a 2 mass% aqueous solution is measured by the following method.

### (Viscosity of 2 mass% aqueous solution)

An anionic polymer is added to an Erlenmeyer flask, water is added such that the concentration becomes 2% by mass, and shaking is performed for 30 seconds. The resulting solution is left to stand for 12 hours and mixed for five minutes to prepare a 2 mass% aqueous solution. The resulting aqueous solution is transferred to a tall beaker, and the temperature thereof is adjusted to 25°C. The viscosity of the aqueous solution is measured in accordance with JIS Z8803 using a BM-type viscometer (single-cylinder rotational viscometer). In this case, the measurement is performed at a rotor rotational speed of 60 rpm. When the value reaches the upper limit of the measurement, the rotational speed is sequentially changed to 30 rpm and 12 rpm to perform the measurement.

### [(D) Organic solvent]

In the present embodiment, together with the component (B) and the component (C) described above, an organic solvent having an O/I of less than 1.00, the O/I being a ratio of an organic value to an inorganic value in an organic conceptual diagram, is used as a component (D). This enables the dispersibility of nanocarbon to be improved and enables a nanocarbon dispersion having good dispersion stability and a low viscosity to be provided. The reason for this is considered to be as follows, although it is not limited thereto. Specifically, this is presumably because, in the case of dispersing nanocarbon with a naphthalenesulfonic acid condensate, the organic solvent can enter between nanocarbon particles, which are attracted with each other by van der Waals forces, to weaken the cohesive force, thereby reducing the size of dispersed particles, and the dispersed state can be maintained by the anionic water-soluble polymer.

The organic conceptual diagram is described in, for example, "Organic Conceptual Diagram -Fundamentals and Applications-" (written by Yoshio KODA, SANKYO SHUPPAN Co., Ltd., 1984). The "organic conceptual diagram" is provided as follows: for all organic compounds, two factors that are "organicity" attributable to the covalent bond chain in its carbon region and "inorganicity" due to the influence of electrostatic properties present in the substituent (functional group) are converted into numerical values in accordance with predetermined rules, and are plotted on a diagram in which the X axis represents the organic value (O) and the Y axis represents the inorganic value (I). The O/I in the organic conceptual diagram is the ratio of the organic value (O) to the inorganic value (I).

The O/I is more preferably 0.90 or less, still more preferably 0.80 or less, even still more preferably 0.70 or less. The lower limit of the O/I is not particularly limited, and may be 0 or more, but is preferably 0.10 or more, more preferably 0.20 or more, still more preferably 0.40 or more, even still more preferably 0.50 or more.

Examples of the organic solvent having an O/I of less than 1.00 include organic solvents miscible with water, such as N-methyl-2-pyrrolidone (NMP, O/I = 0.69), N,N-dimethylformamide (DMF, O/I = 0.44), methanol (O/I = 0.20), ethanol (O/I = 0.40), propanol (O/I = 0.60), acetone (O/I = 0.92), acetic acid (O/I = 0.27), dimethyl sulfoxide (O/I = 0.57), pyrrolidine (O/I = 0), 2-pyrrolidone (O/I = 0.55), and dimethylacetamide (DMA, O/I = 0.59). Any one of these may be used, or two or more of these may be used in combination.

Of these, nitrogen-containing organic solvents (organic solvents containing a nitrogen atom) having an O/I of less than 1.00, such as NMP, DMF, pyrrolidine, 2-pyrrolidone, and DMA, are preferably used as the organic solvent serving as the component (D).

### [Nanocarbon dispersion]

The nanocarbon dispersion according to the present embodiment includes water as a component (E) together with the components (A) to (D) and is a dispersion liquid in which nanocarbon is dispersed in water containing an organic solvent.

The method for preparing the nanocarbon dispersion is not particularly limited. The nanocarbon dispersion can be prepared by, for example, mixing the components (A) to (C) together with the organic solvent serving as the component (D) and water serving as the component (E), and performing dispersion treatment using a dispersing device such as Homodisper or a homogenizer.

In the nanocarbon dispersion, the contents of the components are not particularly limited. For example, the content of the nanocarbon serving as the component (A) may be 0.01% to 5% by mass or may be 0.01% to 3% by mass relative to 100% by mass of the nanocarbon dispersion.

The content of the naphthalenesulfonic acid condensate serving as the component (B) may be, for example, 5 to 140 parts by mass or 9 to 50 parts by mass relative to 100 parts by mass of the nanocarbon serving as the component (A). The content of the component (B) may be, for example, 0.4 to 25.0 parts by mass or 0.4 to 2.5 parts by mass relative to 100 parts by mass of the total amount of the component (B), the component (C), and the component (D).

The content of the anionic water-soluble polymer serving as the component (C) may be, for example, 5 to 150 parts by mass or 100 to 140 parts by mass relative to 100 parts by mass of the nanocarbon serving as the component (A). The content of the component (C) may be, for example, 0.4 to 50.0 parts by mass or 4.5 to 6.5 parts by mass relative to 100 parts by mass of the total amount of the component (B), the component (C), and the component (D).

The content of the organic solvent serving as the component (D) is preferably 0.1 to 50 parts by mass, more preferably 1.0 to 40 parts by mass, still more preferably 5.0 to 30 parts by mass relative to 100 parts by mass of water serving as the component (E) from the viewpoint of enhancing the effects of the present embodiment. The content of the component (D) may be, for example, 25 to 96 parts by mass or 90 to 93 parts by mass relative to 100 parts by mass of the total amount of the component (B), the component (C), and the component (D).

The content of water serving as the component (E) may be 50% to 98% by mass or may be 65% to 90% by mass relative to 100% by mass of the nanocarbon dispersion.

The nanocarbon dispersion according to the present embodiment may contain various additives in addition to the components described above.

In one embodiment, the nanocarbon dispersion is used as an electrode coating material of a battery such as a lithium-ion battery. In such a case, for example, various additives such as a dispersant other than the component (B) and the component (C), a binder, an antifoaming agent, and a leveling agent may be optionally added to the nanocarbon dispersion used as an electrode coating material. Examples of the binder include various resin emulsions such as styrene-butadiene rubber (SBR) emulsions, polyurethane emulsions, polyvinyl acetate emulsions, and acrylic resin emulsions.

### [Battery]

A battery according to one embodiment includes an electrode produced using the nanocarbon dispersion described above. The electrode may be a positive electrode or a negative electrode. The battery is preferably a nonaqueous electrolyte secondary battery such as a lithium-ion battery (i.e., lithium-ion secondary battery).

The electrode may include a current collector and an active material layer formed on the current collector, and the active material layer may be formed using the nanocarbon dispersion. Specifically, the nanocarbon dispersion can be used as an electrode coating material, and the electrode coating material can be applied to the current collector and dried to produce the electrode.

The current collector may be any electron conductor that does not adversely affect the resulting battery. For example, copper, stainless steel, nickel, aluminum, titanium, baked carbon, conductive polymers, conductive glass, Al-Cd alloys, and the like can be used. Alternatively, for the purpose of improving adhesiveness, electrical conductivity, and oxidation resistance, a member made of copper or the like whose surface is treated with carbon, nickel, titanium, silver, or the like can be used. The surfaces of these current collectors may be subjected to oxidation treatment. With regard to the shape of the current collector, not only a foil-like material but also film-like, sheet-like, and net-like materials, punched or expanded materials, and formed bodies such as a lath body, a porous body, and a foamed body may be used.

In one embodiment, a nonaqueous electrolyte secondary battery includes a negative electrode, a positive electrode, a separator disposed between the negative electrode and the positive electrode, and an electrolyte, and an electrode produced using the above nanocarbon dispersion is used as the negative electrode and/or the positive electrode. In one embodiment, a nonaqueous electrolyte secondary battery may include a stack in which negative electrodes and positive electrodes are alternately stacked with separators interposed therebetween, a container that houses the stack, and an electrolyte such as a nonaqueous electrolyte solution poured in the container. For example, a nonaqueous electrolyte obtained by dissolving a lithium salt serving as a supporting electrolyte in an organic solvent can be used to thereby constitute a lithium-ion secondary battery.

### EXAMPLES

Hereinafter, the present invention will be described in more detail with reference to Examples and Comparative Examples; however, the present invention is not limited thereto.

Details of components used in Examples and Comparative Examples are described below.

### [Component (A)]

·CNT-1: Single-walled carbon nanotube (SWCNT), Carbon purity > 99%, Average diameter = 1.6 nm, Average fiber length = 5 pm, "TUBALL BATT" manufactured by OCSiAL
·CNT-2: Multi-walled carbon nanotube (MWCNT), Carbon purity > 99%, Average diameter = 12 nm, Average fiber length = 10 pm, "Flotube9110" manufactured by CNano Technology

### [Component (B)]

### ·NSF-1: Methylnaphthalenesulfonic acid-formaldehyde condensate sodium salt, Number-average molecular weight = 1,000, Product synthesized by Synthesis Example 1 below

### (Synthesis Example 1)

(1) To 1 mole (142.2 g) of methylnaphthalene, 1.4 moles (140.0 g) of concentrated sulfuric acid was added, and the resulting mixture was caused to react at 160°C for two hours.
(2) The reaction solution obtained in (1) above was diluted by adding 10 moles (180.2 g) of distilled water thereto, and 0.4 moles of formaldehyde (32.5 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 1.8 moles of sodium hydroxide (150 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a methylnaphthalenesulfonic acid-formaldehyde condensate sodium salt.
(5) Water was distilled off from the aqueous solution obtained in (4) above with a rotary evaporator, and the resulting solid was dried in a vacuum dryer and ground to obtain a powder of the methylnaphthalenesulfonic acid-formaldehyde condensate sodium salt (NSF-1).

### ·NSF-2: Methylnaphthalenesulfonic acid formaldehyde-condensate sodium salt, Number-average molecular weight = 2,500, "LAVELIN AN-40" manufactured by DKS Co., Ltd.

### ·NSF-3: Butylnaphthalenesulfonic acid-formaldehyde condensate sodium salt, Number-average molecular weight = 1,000, Product synthesized by Synthesis Example 2 below

### (Synthesis Example 2)

(1) To 1 mole (128.2 g) of naphthalene, 1 mole (74.1 g) of 1-butanol and 3 moles (300.0 g) of concentrated sulfuric acid were added, and the resulting mixture was caused to react at 90°C for three hours.
(2) The reaction solution obtained in (1) above was diluted by adding 10 moles (180.2 g) of distilled water thereto, and 0.6 moles of formaldehyde (48.7 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 5 moles of sodium hydroxide (416.7 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a butylnaphthalenesulfonic acid-formaldehyde condensate sodium salt.
(5) Water was distilled off from the aqueous solution obtained in (4) above with a rotary evaporator, and the resulting solid was dried in a vacuum dryer and ground to obtain a powder of the butylnaphthalenesulfonic acid-formaldehyde condensate sodium salt (NSF-3).

### ·NSF-4: Methylnaphthalenesulfonic acid-formaldehyde condensate sodium salt, Number-average molecular weight = 4,000, Product synthesized by Synthesis Example 3 below

### (Synthesis Example 3)

(1) To 1 mole (142.2 g) of methylnaphthalene, 1.4 moles (140.0 g) of concentrated sulfuric acid was added, and the resulting mixture was caused to react at 160°C for two hours.
(2) The reaction solution obtained in (1) above was diluted by adding 10 moles (180.2 g) of distilled water thereto, and 1.2 moles of formaldehyde (97.4 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 1.8 moles of sodium hydroxide (150 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a methylnaphthalenesulfonic acid-formaldehyde condensate sodium salt.
(5) Water was distilled off from the aqueous solution obtained in (4) above with a rotary evaporator, and the resulting solid was dried in a vacuum dryer and ground to obtain a powder of the methylnaphthalenesulfonic acid-formaldehyde condensate sodium salt (NSF-4).

### ·NSF-5: Naphthalenesulfonic acid-formaldehyde condensate sodium salt, Number-average molecular weight = 1,000, Product synthesized by Synthesis Example 4 below

### (Synthesis Example 4)

(1) To 1 mole (128.2 g) of naphthalene, 1.4 moles (140.0 g) of concentrated sulfuric acid was added, and the resulting mixture was caused to react at 160°C for two hours.
(2) The reaction solution obtained in (1) above was diluted by adding 10 moles (180.2 g) of distilled water thereto, and 0.33 moles of formaldehyde (26.8 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 1.8 moles of sodium hydroxide (150 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a naphthalenesulfonic acid-formaldehyde condensate sodium salt.
(5) Water was distilled off from the aqueous solution obtained in (4) above with a rotary evaporator, and the resulting solid was dried in a vacuum dryer and ground to obtain a powder of the naphthalenesulfonic acid-formaldehyde condensate sodium salt (NSF-5).

### ·NSF-6: Formaldehyde condensate sodium salt of methylnaphthalenesulfonic acid and naphthalenesulfonic acid, Methylnaphthalenesulfonic acid:Naphthalenesulfonic acid = 1:1 (molar ratio), Number-average molecular weight = 1,000, Product synthesized by Synthesis Example 5 below

### (Synthesis Example 5)

(1) To a mixture of 0.5 moles (71.1 g) of methylnaphthalene and 0.5 moles (64.1 g) of naphthalene, 1.4 moles (140.0 g) of concentrated sulfuric acid was added, and the resulting mixture was caused to react at 160°C for two hours.
(2) The reaction solution obtained in (1) above was diluted by adding 10 moles (180.2 g) of distilled water thereto, and 0.4 moles of formaldehyde (26.8 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 1.8 moles of sodium hydroxide (150 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a formaldehyde condensate sodium salt of methylnaphthalenesulfonic acid and naphthalenesulfonic acid.
(5) Water was distilled off from the aqueous solution obtained in (4) above with a rotary evaporator, and the resulting solid was dried in a vacuum dryer and ground to obtain a powder of the formaldehyde condensate sodium salt of methylnaphthalenesulfonic acid and naphthalenesulfonic acid (NSF-6) (methylnaphthalenesulfonic acid:naphthalenesulfonic acid = 1:1).

·NSF-7: Formaldehyde condensate sodium salt of methylnaphthalenesulfonic acid and naphthalenesulfonic acid, Methylnaphthalenesulfonic acid:Naphthalenesulfonic acid = 3:7 (molar ratio), Number-average molecular weight = 1,000, Product synthesized by Synthesis Example 6 below

### (Synthesis Example 6)

(1) To a mixture of 0.3 moles (42.6 g) of methylnaphthalene and 0.7 moles (89.7 g) of naphthalene, 1.4 moles (140.0 g) of concentrated sulfuric acid was added, and the resulting mixture was caused to react at 160°C for two hours.
(2) The reaction solution obtained in (1) above was diluted by adding 10 moles (180.2 g) of distilled water thereto, and 0.4 moles of formaldehyde (26.8 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 1.8 moles of sodium hydroxide (150 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a formaldehyde condensate sodium salt of methylnaphthalenesulfonic acid and naphthalenesulfonic acid.
(5) Water was distilled off from the aqueous solution obtained in (4) above with a rotary evaporator, and the resulting solid was dried in a vacuum dryer and ground to obtain a powder of the formaldehyde condensate sodium salt of methylnaphthalenesulfonic acid and naphthalenesulfonic acid (NSF-7) (methylnaphthalenesulfonic acid:naphthalenesulfonic acid = 3:7).

### ·NSF-8: Formaldehyde condensate sodium salt of methylnaphthalenesulfonic acid and naphthalenesulfonic acid, Methylnaphthalenesulfonic acid:Naphthalenesulfonic acid = 7:3 (molar ratio), Number-average molecular weight = 1,000, Product synthesized by Synthesis Example 7 below

### (Synthesis Example 7)

(1) To a mixture of 0.7 moles (99.5 g) of methylnaphthalene and 0.3 moles (38.5 g) of naphthalene, 1.4 moles (140.0 g) of concentrated sulfuric acid was added, and the resulting mixture was caused to react at 160°C for two hours.
(2) The reaction solution obtained in (1) above was diluted by adding 10 moles (180.2 g) of distilled water thereto, and 0.4 moles of formaldehyde (26.8 g in terms of a 37% aqueous solution of formaldehyde) was then added dropwise at 100°C over two hours, and the reaction solution was further caused to react at 100°C for five hours.
(3) The reaction solution obtained in (2) above was neutralized by adding 1.8 moles of sodium hydroxide (150 g in terms of a 48% aqueous solution of sodium hydroxide) dropwise thereto.
(4) The aqueous solution after neutralization obtained in (3) above was cooled to 5°C to precipitate mirabilite, and the mirabilite was removed by centrifugation at 2,500 rpm for 30 minutes to obtain an aqueous solution of a formaldehyde condensate sodium salt of methylnaphthalenesulfonic acid and naphthalenesulfonic acid.
(5) Water was distilled off from the aqueous solution obtained in (4) above with a rotary evaporator, and the resulting solid was dried in a vacuum dryer and ground to obtain a powder of the formaldehyde condensate sodium salt of methylnaphthalenesulfonic acid and naphthalenesulfonic acid (NSF-8) (methylnaphthalenesulfonic acid:naphthalenesulfonic acid = 7:3).

### ·MNS-9: Methylnaphthalenesulfonic acid sodium salt, Molecular weight = 245, Product synthesized by Synthesis Example 8 below

### (Synthesis Example 8)

(1) To 1 mole (142.2 g) of methylnaphthalene, 1.4 moles (140.0 g) of concentrated sulfuric acid was added, and the resulting mixture was caused to react at 160°C for two hours.
(2) The reaction solution obtained in (1) above was diluted by adding 30 moles (540.6 g) of distilled water thereto and then neutralized by adding 1.8 moles of sodium hydroxide (150 g in terms of a 48% aqueous solution of sodium hydroxide) dropwise thereto.
(3) The aqueous solution after neutralization obtained in (2) above was cooled to 5°C to precipitate mirabilite, and the mirabilite was removed by centrifugation at 2,500 rpm for 30 minutes to obtain an aqueous solution of a methylnaphthalenesulfonic acid sodium salt.
(4) Water was distilled off from the aqueous solution obtained in (3) above with a rotary evaporator, and the resulting solid was dried in a vacuum dryer and ground to obtain a powder of the methylnaphthalenesulfonic acid sodium salt (MNS-9).

### [Component (C)]

·CMC-1: Carboxymethyl cellulose sodium salt, Degree of etherification = 0.75, Viscosity of 2 mass% aqueous solution = 3 mPa·s, "CELLOGEN 5A" manufactured by DKS Co., Ltd.
·CMC-2: Carboxymethyl cellulose sodium salt, Degree of etherification = 0.65, Viscosity of 2 mass% aqueous solution = 100 mPa·s, "CELLOGEN PR" manufactured by DKS Co., Ltd.
·CMC-3: Carboxymethyl cellulose sodium salt, Degree of etherification = 0.65, Viscosity of 2 mass% aqueous solution = 3,300 mPa·s, "CELLOGEN WS-C" manufactured by DKS Co., Ltd.

### ·Polycarboxylic acid salt: Polyacrylic acid sodium salt, Viscosity of 2 mass% aqueous solution = 13 mPa·s, Product synthesized by Synthesis Example 9 below

### (Synthesis Example 9)

(1) To 1 mole (72.06 g) of acrylic acid monomer, 4 moles (72 g) of distilled water was added, and nitrogen bubbling (500 mL/min) was performed for one hour.
(2) β-Thiopropionic acid (0.1 moles, 10.6 g) was added thereto, and the resulting mixture was heated to 40°C.
(3) 2,2'-Azobis(2-amidinopropane)dihydrochloride (0.001 moles, 0.27 g) was added thereto, the temperature was gradually increased to 60°C over one hour, and the resulting mixture was caused to react at 60°C for one hour.
(4) The temperature was adjusted to 40°C, 0.001 moles (0.27 g) of 2,2'-azobis(2-amidinopropane)dihydrochloride was again added thereto, the temperature was gradually increased to 60°C over one hour, and the resulting mixture was caused to react at 60°C for one hour.
(5) The temperature was adjusted to 50°C, and neutralization was performed by adding 1 mole of sodium hydroxide (83 g in terms of a 48% aqueous solution of sodium hydroxide) thereto to obtain an aqueous solution of a polyacrylic acid sodium salt.
(6) Water was distilled off from the aqueous solution obtained in (5) above with a rotary evaporator, and the resulting solid was dried in a vacuum dryer and ground to obtain a powder of the polyacrylic acid sodium salt.

### [Component (D)]

·NMP: O/I in organic conceptual diagram = 0.69, "N-methyl-2-pyrrolidone" manufactured by Mitsubishi Chemical Corporation
·DMF: O/I in organic conceptual diagram = 0.44, "N,N-dimethylformamide" manufactured by NACALAI TESQUE, INC.
·MeOH: O/I in organic conceptual diagram = 0.20, "methanol" manufactured by NACALAI TESQUE, INC.
·Acetone: O/I in organic conceptual diagram = 0.92, "acetone" manufactured by NACALAI TESQUE, INC.
·Ethyl acetate: O/I in organic conceptual diagram = 1.30, "ethyl acetate" manufactured by KANTO CHEMICAL CO., INC.
·Toluene: O/I in organic conceptual diagram = 9.30, "toluene (methylbenzene)" manufactured by YAMAKI Corporation

### [Examples 1 to 21 and Comparative Examples 1 to 7]

The compositions (parts by mass) of nanocarbon dispersions of Examples 1 to 21 and Comparative Examples 1 to 7 were as shown in Tables 1 to 3 below, and dispersibility, viscosity, dispersion stability, and electrical conductivity were evaluated. The evaluation methods are as follows.

### [Dispersibility]

In Example 1, 0.54 g of NSF-1, 1.1 g of CNT-1 serving as nanocarbon, and 1.1 g of CMC-1 were weighed in a 300 mL beaker, 21.5 g of NMP and 75.8 g of water were added thereto, and the resulting mixture was stirred with a stirrer (1,000 rpm) for 12 hours to obtain a nanocarbon dispersion. In Examples 2 to 21 and Comparative Examples 1 to 7, nanocarbon dispersions were obtained as in Example 1 except that the types and amounts of components used were changed as shown in Tables 1 to 3.

Preparations were prepared using the obtained nanocarbon dispersions and observed with an optical microscope (magnification: 35 times). Thus, the dispersibility of nanocarbon was evaluated in the following five grades, and 3 or more was evaluated as pass. Note that, in this dispersibility evaluation, the dispersion liquids were prepared under a low shearing condition in order to evaluate the ease of disintegration of nanocarbon.
5: An aggregate of less than 0.6 mm at the maximum is observed.
4: An aggregate of 0.6 mm or more and less than 0.8 mm at the maximum is observed.
3: An aggregate of 0.8 mm or more and less than 1 mm at the maximum is observed.
2: An aggregate of 1 mm or more and less than 2 mm at the maximum is observed.
1: An aggregate of 2 mm or more at the maximum is observed.

### [Viscosity]

Each of the nanocarbon dispersions prepared in the dispersibility evaluation was collected in a 100 mL beaker and dispersed using a device in which a tube pump was connected to an ultrasonic homogenizer ("US-600T" manufactured by NIHONSEIKI KAISHA LTD., with a circulation unit) at an output of 100 µA for 10 minutes while the nanocarbon dispersion was circulated. The viscosity of the resulting dispersion liquid was measured with a B-type viscometer ("TVB-10" manufactured by Toki Sangyo Co., Ltd.). The condition during the measurement was 6 rpm (three minutes). The evaluation results of the viscosity were each denoted by the following five grades.
5: Less than 1 Pa·s
4: 1 Pa·s or more and less than 3 Pa·s
3: 3 Pa·s or more and less than 5 Pa·s
2: 5 Pa·s or more and less than 7 Pa·s
1: 7 Pa·s or more

### [Dispersion stability]

A portion of each of the nanocarbon dispersions prepared in the viscosity evaluation was taken, water was added such that the total solid content became 0.2% by mass, and stirring was performed with Homodisper (manufactured by PRIMIX Corporation) at 1,600 rpm for 15 minutes to dilute and prepare a nanocarbon dispersion. About 1 mL of the resulting dispersion liquid was collected and placed in an NMR tube, and the Rsp value was measured by pulse NMR (Resonance systems, Spin Track) (heated to 30°C). Subsequently, the dispersion liquid was left to stand at room temperature for three days, and the Rsp value was measured again under the same conditions to evaluate the dispersion stability on the basis of the rate of change in this case. The dispersion stability of nanocarbon was evaluated in the following five ranks, and 3 or more was evaluated as pass.
5: The rate of change in the Rsp value is less than 10%.
4: The rate of change in the Rsp value is 10% or more and less than 20%.
3: The rate of change in the Rsp value is 20% or more and less than 30%.
2: The rate of change in the Rsp value is 30% or more and less than 40%.
1: The rate of change in the Rsp value is 40% or more.

### [Electrical conductivity]

A portion of each of the nanocarbon dispersions prepared in the viscosity evaluation was taken, a resin component was added such that nanocarbon:SBR emulsion = 1:30 (mass ratio), water was added such that the total solid content became 0.5% by mass, and stirring was performed with Homodisper (manufactured by PRIMIX Corporation) at 1,600 rpm for 15 minutes to prepare a dispersion containing nanocarbon and a resin. The resulting dispersion was applied onto a cover glass with a size of 1 cm × 1 cm using a spin coater ("SPINNER 1H-D2" manufactured by MIKASA Co., Ltd.) and dried in a fan dryer ("DRM620DB" manufactured by ADVANTEC), and the electrical conductivity was measured with a low-resistance resistivity meter ("Loresta GP" manufactured by Nittoseiko Analytech Co., Ltd.). The electrical conductivity of nanocarbon was evaluated in the following five ranks, and 3 or more was evaluated as pass.
5: The rate of improvement in electrical conductivity is 50% or more compared with an evaluation reference sample.
4: The rate of improvement in electrical conductivity is 30% or more and less than 50% compared with an evaluation reference sample.
3: The rate of improvement in electrical conductivity is 20% or more and less than 30% compared with an evaluation reference sample.
2: The rate of improvement in electrical conductivity is 10% or more and less than 20% compared with an evaluation reference sample.
1: The rate of improvement in electrical conductivity is less than 10% compared with an evaluation reference sample.

The above evaluation reference sample was prepared as follows. In a 300 mL beaker, 1.1 g of single-walled carbon nanotube ("TUBALL BATT" manufactured by OCSiAL) in terms of CNT parts by mass and 21.5 g of NMP ("N-methyl-2-pyrrolidone" manufactured by Mitsubishi Chemical Corporation) were placed, water was added such that the water parts by mass became 75.8 g, and the resulting mixture was stirred with a stirrer (1,000 rpm) for 12 hours. The resin component was added by the predetermined method described above to prepare a dispersion containing nanocarbon and a resin.

The SBR emulsion used above was prepared by the method described below. In a flask equipped with a stirrer, a reflux condenser, and a thermometer, 51 parts by mass of water and 0.2 parts by mass of a dodecylbenzenesulfonic acid salt were charged, and the temperature was increased to 40°C. In addition, 5 parts by mass of acrylonitrile, 8 parts by mass of methyl methacrylate, 55 parts by mass of styrene, 32 parts by mass of 1,3-butadiene, and 0.95 parts by mass of an alkylbenzenesulfonic acid salt were separately emulsified and dispersed in 40 parts by mass of water to prepare a preliminary emulsified liquid. The preliminary emulsified liquid was added dropwise from a dropping funnel into the flask over four hours, and 0.4 parts by mass of a sodium persulfate initiator was added as a polymerization initiator in the form of a 10 mass% aqueous solution to initiate polymerization. A reaction temperature of 65°C was maintained for four hours, and the temperature was then increased to 80°C, and the reaction was continued for two hours to obtain the SBR emulsion.

**[Table 1]**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Composition (parts by mass) | | | | | | | | | | |
| CNT-1 | 1.1 | 1.1 | 1.1 | 1.1 | 1.1 | 1.1 | 1.1 | 1.1 | 1.1 | 1.1 |
| CNT-2 | | | | | | | | | | |
| NSF-1 | 0.54 | | | | 0.25 | 0.15 | 0.35 | | | |
| NSF-2 | | 0.54 | | | | | | | | |
| NSF-3 | | | 0.54 | | | | | | | |
| NSF-4 | | | | | | | | | | |
| NSF-5 | | | | 0.54 | 0.25 | 0.35 | | | | |
| NSF-6 | | | | | | | | 0.5 | | |
| NSF-7 | | | | | | | | | 0.5 | |
| NSF-8 | | | | | | | | | | 0.5 |
| MNS-9 | | | | | | | | | | |
| CMC-1 | 1.1 | 1.1 | | 1.1 | 1.1 | 1.1 | 1.1 | 1.1 | 1.1 | 1.1 |
| CMC-2 | | | | | | | | | | |
| CMC-3 | | | | | | | | | | |

| Polycarboxylic acid salt | | | | | | | | | | |
|---|---|---|---|---|---|---|---|---|---|---|
| NMP | 21.5 | 21.5 | 21.5 | 21.5 | 21.5 | 21.5 | 21.5 | 21.5 | 21.5 | 21.5 |
| DMF | | | | | | | | | | |
| MeOH | | | | | | | | | | |
| Acetone | | | | | | | | | | |
| Ethyl acetate | | | | | | | | | | |
| Toluene | | | | | | | | | | |
| Water | 75.8 | 75.8 | 75.8 | 75.8 | 75.9 | 75.9 | 75.9 | 75.9 | 75.9 | 75.9 |
| Total | 100 | 100 | 100 | 100 | 100 | 100 | 100 | 100 | 100 | 100 |

| Ratio (mass ratio) | | | | | | | | | | |
|---|---|---|---|---|---|---|---|---|---|---|
| B/(B+C+D)×100 | 2.3 | 2.3 | 2.3 | 2.3 | 2.2 | 2.2 | 2.2 | 2.2 | 2.2 | 2.2 |
| C/(B+C+D)×100 | 4.7 | 4.7 | 4.7 | 4.7 | 4.7 | 4.7 | 4.7 | 4.7 | 4.7 | 4.7 |
| D/(B+C+D)×100 | 93.0 | 93.0 | 93.0 | 93.0 | 93.2 | 93.2 | 93.2 | 93.2 | 93.2 | 93.2 |
| Evaluation | | | | | | | | | | |
| Dispersibility | 5 | 4 | 3 | 4 | 5 | 4 | 5 | 5 | 4 | 5 |
| Viscosity | 5 | 4 | 5 | 5 | 5 | 5 | 5 | 5 | 5 | 5 |
| Dispersion stability | 5 | 5 | 5 | 5 | 5 | 5 | 5 | 5 | 5 | 5 |
| Electrical conductivity | 5 | 5 | 4 | 5 | 5 | 5 | 5 | 5 | 5 | 5 |

**[Table 2]**

| | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|
| Composition (parts by mass) | | | | | | | | | | | |
| CNT-1 | 1.1 | 1.1 | 1.1 | 1.1 | 1.1 | | 1.1 | 1.1 | 1.1 | 1.1 | 1.1 |
| CNT-2 | | | | | | 1.1 | | | | | |
| NSF-1 | 0.54 | 0.54 | 0.54 | 0.54 | 0.54 | 0.54 | 1.5 | 0.1 | 0.54 | 0.54 | 0.54 |
| NSF-2 | | | | | | | | | | | |
| NSF-3 | | | | | | | | | | | |
| NSF-4 | | | | | | | | | | | |
| NSF-5 | | | | .. | | | | | | | |
| NSF-6 | | | | | | | | | | | |
| NSF-7 | | | | | | | | | | | |
| NSF-8 | | | | | | | | | | | |
| MNS-9 | | | | | | | | | | | |
| CMC-1 | | | 1.1 | 1.1 | 1.1 | 1.1 | 0.1 | 1.5 | 1.1 | 1.1 | |
| CMC-2 | 1.1 | | | | | | | | | | |
| CMC-3 | | 1.1 | | | | | | | | | |

| Polycarboxylic acid salt | | | | | | | | | | | 1.1 |
|---|---|---|---|---|---|---|---|---|---|---|---|
| NMP | 21.5 | 21.5 | | | | 21.5 | 21.5 | 21.5 | 32 | 0.5 | 21.5 |
| | | | 21.5 | | | | | | | | |
| MeOH | | | | 21.5 | | | | | | | |
| Acetone | | | | | 21.5 | | | | | | |
| Ethyl acetate | | | | | | | | | | | |
| Toluene | | | | | | | | | | | |
| Water | 75.8 | 75.8 | 75.8 | 75.8 | 75.8 | 75.8 | 75.8 | 75.8 | 65.1 | 96.8 | 75.8 |
| Total | 100 | 100 | 100 | 100 | 100 | 100 | 100 | 100 | 100 | 100 | 100 |

| Ratio (mass ratio) | | | | | | | | | | | |
|---|---|---|---|---|---|---|---|---|---|---|---|
| B/(B+C+D)×100 | 2.3 | 2.3 | 2.3 | 2.3 | 2.3 | 2.3 | 6.5 | 0.4 | 1.6 | 24.9 | 2.3 |
| C/(B+C+D)×100 | 4.7 | 4.7 | 4.7 | 4.7 | 4.7 | 4.7 | 0.4 | 6.5 | 3.2 | 49.9 | 4.7 |
| D/(B+C+D)×100 | 93.0 | 93.0 | 93.0 | 93.0 | 93.0 | 93.0 | 93.0 | 93.0 | 95.2 | 25.2 | 93.0 |
| Evaluation | | | | | | | | | | | |
| Dispersibility | 5 | 5 | 4 | 3 | 3 | 5 | 4 | 5 | 5 | 4 | 4 |
| Viscosity | 5 | 3 | 5 | 5 | 5 | 5 | 5 | 5 | 4 | 5 | 4 |
| Dispersion stability | 5 | 5 | 5 | 5 | 5 | 5 | 4 | 5 | 4 | 5 | 5 |
| Electrical conductivity | 5 | 5 | 4 | 3 | 3 | 5 | 5 | 5 | 4 | 4 | 4 |

**[Table 3]**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Composition (parts by mass) | | | | | | | |
| CNT-1 | 1.1 | 1.1 | 1.1 | 1.1 | 1.1 | 1.1 | 1.1 |
| CNT-2 | | | | | | | |
| NSF-1 | | 1.6 | 0.54 | | 0.54 | 0.54 | |
| NSF-2 | | | | | | | |
| NSF-3 | | | | | | | |
| NSF-4 | | | | 0.54 | | | |
| NSF-5 | | | | | | | |
| NSF-6 | | | | | | | |
| NSF-7 | | | | | | | |
| NSF-8 | | | | | | | |
| MNS-9 | | | | | | | 0.54 |
| CMC-1 | 1.6 | | 1.1 | 1.1 | 1.1 | 1.1 | 1.1 |
| CMC-2 | | | | | | | |
| CMC-3 | | | | | | | |

| Polycarboxylic acid salt | | | | | | | |
|---|---|---|---|---|---|---|---|
| NMP | 21.5 | 21.5 | | 21.5 | 21.5 | 21.5 | 21.5 |
| DMF | | | | | | | |
| MeOH | | | | | | | |
| Acetone | | | | | | | |
| Ethyl acetate | | | | | 21.5 | | |
| Toluene | | | | | | 21.5 | |
| Water | 75.8 | 75.8 | | 75.8 | 54.3 | 54.3 | 75.8 |
| Total | 100 | 100 | 100 | 100 | 100 | 100 | 100 |

| Ratio (mass ratio) | | | | | | | |
|---|---|---|---|---|---|---|---|
| B/(B+C+D)×100 | 0 | 6.9 | 33.3 | 2.3 | 1.2 | 1.2 | 2.3 |
| C/(B+C+D)×100 | 6.9 | 0 | 66.7 | 4.7 | 2.4 | 2.4 | 4.7 |
| D/(B+C+D)×100 | 93.1 | 93.1 | 0 | 93.0 | 96.4 | 96.4 | 93.0 |
| Evaluation | | | | | | | |
| Dispersibility | 2 | 2 | 1 | 2 | 1 | 1 | 3 |
| Viscosity | 5 | 5 | 5 | 1 | 5 | 5 | 5 |
| Dispersion stability | 2 | 2 | 2 | 4 | 1 | 1 | 2 |
| Electrical conductivity | 3 | 2 | 2 | 2 | 1 | 1 | 2 |

The results are as shown in Tables 1 to 3. In Comparative Example 1, no naphthalenesulfonic acid condensate is blended. In Comparative Example 2, no anionic water-soluble polymer is blended. In Comparative Example 3, no organic solvent is blended. In these Comparative Examples, the dispersibility and dispersion stability were insufficient. In Comparative Example 4, since a naphthalenesulfonic acid condensate having a high number-average molecular weight was used, the dispersibility was insufficient and the viscosity was also high. In Comparative Examples 5 and 6, since an organic solvent having a large O/I was used, the dispersibility and dispersion stability were poor and the electrical conductivity also decreased. In Comparative Example 7, since a naphthalenesulfonic acid salt was used instead of a naphthalenesulfonic acid condensate, the dispersibility and dispersion stability were insufficient.

In contrast, in Examples 1 to 21, nanocarbon dispersions having good dispersibility and dispersion stability and having a low viscosity were obtained, and the nanocarbon dispersions also had good electrical conductivity. The comparison between Example 1 and Example 3 shows that, as for the alkyl group of the alkylnaphthalenesulfonic acid condensate, a methyl group provides a better effect of improving the dispersibility than a butyl group. The results of Example 1 and Examples 4 to 10 showed that the higher the component ratio of the alkylnaphthalenesulfonic acid in the naphthalenesulfonic acid condensate, the better the effect of improving the dispersibility. The results of Example 1 and Examples 13 to 15 showed that NMP was the best organic solvent.

Note that, in various numerical ranges described in the specification, the upper limit values and the lower limit values thereof may be combined with one another, and it is to be understood that all of the combinations are described as preferred numerical ranges in the present specification. The description of a numerical range expressed using "X to Y" means X or more and Y or less.

Some embodiments according to the present invention have been described above; however, these embodiments are provided as examples and are not intended to limit the scope of the invention. These embodiments can be carried out in various other forms and can be subjected to various omissions, replacements, and modifications without departing from the spirit of the invention. These embodiments and omissions, replacements, modifications, and the like thereof are included in the scope and spirit of the invention and are similarly included in the scope of the invention as defined by the claims and equivalents thereof.

## Claims

1. A nanocarbon dispersion comprising:
(A) nanocarbon;
(B) a naphthalenesulfonic acid condensate which is at least one selected from the group consisting of alkylnaphthalenesulfonic acid-formaldehyde condensates, a naphthalenesulfonic acid-formaldehyde condensate, formaldehyde condensates of an alkylnaphthalenesulfonic acid and naphthalenesulfonic acid, and salts thereof and which has a number-average molecular weight of 470 to 3,000;
(C) an anionic water-soluble polymer (provided that the naphthalenesulfonic acid condensate is excluded);
(D) an organic solvent having an O/I of less than 1.00, the O/I being a ratio of an organic value to an inorganic value in an organic conceptual diagram; and
(E) water.

2. The nanocarbon dispersion according to Claim 1, wherein the organic solvent is a nitrogen-containing organic solvent.

3. The nanocarbon dispersion according to Claim 1 or 2, wherein a content of the organic solvent is 0.1 to 50 parts by mass relative to 100 parts by mass of water.

4. The nanocarbon dispersion according to any one of Claims 1 to 3, wherein a 2 mass% aqueous solution of the anionic water-soluble polymer has a viscosity of 1 to 5,000 mPa·s.

5. The nanocarbon dispersion according to any one of Claims 1 to 4, wherein the naphthalenesulfonic acid condensate includes at least one selected from the group consisting of alkylnaphthalenesulfonic acid-formaldehyde condensates, formaldehyde condensates of an alkylnaphthalenesulfonic acid and naphthalenesulfonic acid, the formaldehyde condensates having a molar ratio of the alkylnaphthalenesulfonic acid of 50% by mole or more, and salts thereof.

6. The nanocarbon dispersion according to any one of Claims 1 to 5, wherein the anionic water-soluble polymer includes at least one selected from the group consisting of carboxymethyl cellulose, polycarboxylic acids, and salts thereof.

7. The nanocarbon dispersion according to any one of Claims 1 to 6, wherein the nanocarbon dispersion is an electrode coating material for a battery.

8. A battery comprising an electrode produced using the nanocarbon dispersion according to Claim 7.
